# EUROPEAN PATENT APPLICATION

(11) **EP 3 457 208 A1**
(43) Date of publication of application: **20.03.2019**
(21) Application number: 17190977.3
(22) Date of filing: 13.09.2017
(51) Int. Cl.: G03B 15/02, G03B 15/03, G03B 17/55, G03B 35/00, G03B 37/00

(54) **DEVICE FOR RECORDING A THREE-DIMENSIONAL ENVIRONMENT**

(71) Applicant: VROXTECHNOLOGY B.V., 3051 AP Rotterdam (NL)
(72) Inventor: Bak, Alexandra, 2903 SP Capelle aan den IJssel (NL); Norani, Hamid, 3132 CA Vlaardingen (NL)
(74) Representative: 't Jong, Bastiaan Jacob

(57) **Abstract**

The invention relates to a device for recording a three-dimensional environment, comprising:
- a preferably spherical housing;
- a plurality of cameras, arranged to and projecting outwardly from the housing with overlapping fields of view; and
- a plurality of light emitting diodes, arranged to and projecting outwardly from the housing
wherein the device comprises at least one heat sink with a bottom, fixed to the outer surface of the housing, and a top, arranged in heat exchanging contact with the plurality of light emitting diodes.

## Description

The invention relates to a device for recording a three-dimensional environment, comprising:
- a preferably spherical housing;
- a plurality of cameras, arranged to and projecting outwardly from the housing with overlapping fields of view; and
- a plurality of light emitting diodes, arranged to and projecting outwardly from the housing.

Such a device is known from publication EP 3206082 A1, a publication of a patent application filed by the applicant of the current application. Such a device can be used to record a non-virtual three-dimensional environment using the cameras, and these can be used to provide a virtual representation of the environment. In order to use the device at different lighting conditions, the device is provided with illumination elements and more preferably light emitting diodes.

Light emitting diodes have a tendency to generate a significant amount of heat, and temperatures up to 125 degrees Celsius are not exceptional. The heat built up in the device may, especially in the case of prolonged use, harm the functioning of the light emitting diodes and/or the cameras.

It is now an object of the invention to reduce or even obviate the above-mentioned disadvantages.

This object is achieved by the invention with a device according to the preamble, wherein the device comprises at least one heat sink with a bottom, fixed to the outer surface of the housing, and a top, arranged in heat exchanging contact with the plurality of light emitting diodes.

The provision of a heat sink which is, with its bottom fixed to the outer surface of the housing, and with its top to the light emitting diodes spaces the light emitting diodes from the housing, and arranges a heat dissipating element between the light emitting diode and the housing, preventing build up of heat in the housing.

Some of the light emitting diodes may be connected to each other through the heat sink, which heat sink may in such a case be polygon-shaped, such as triangle-shaped.

The housing may be built up from a plurality of housing segments, connected to each other. Some or all of the housing segments may be connected to other housing segments by hinges, which allow inspection of the inside of the housing, e.g. for maintenance.

The light emitting diodes may for instance be RGBW light emitting diodes. The light emitting diodes are preferably equally spaced alongside the outer surface of the device in order to increase the efficiency of recording. The light emitting diodes may be adjustable in light and color intensity, individually or in sets comprising a plurality of preferably neighbouring light emitting diodes, e.g. light emitting diodes arranged on the housing in the polygon-shaped such as triangle-shaped pattern. The adjustment may occur through a suitable controller such as a DMX controller.

The device may further be provided with a microphone, such as an omnidirectional microphone, preferably arranged at the top of the housing.

The device may further be provided with connecting means, for connecting the device with a remote control, such as a (tablet) computer, server or (smart)phone, e.g. via cellular data connections and/or Wi-Fi, and/or for determining the geographical location of the device, e.g. via a satellite positioning system. These connecting means may comprise at least one but preferably a plurality of antennas, such as four antennas, preferably equally distributed along the outer surface of the housing. These connecting means may further comprise a router, connected to the antennas.

In a first preferred embodiment of the device according to the invention, the heat sink comprises a plurality of spaced apart elongate fins, upright from the bottom and preferably in heat exchanging contact with the light emitting diodes.

The provision of a heat sink with spaced apart elongate fins allows air to flow along and between the fins, in order to transfer the heat generated by the light emitting diodes to the air in an efficient way.

In a second preferred embodiment of the device according to the invention, the device comprises a heat-conducting paste, arranged between the heat sink and the light emitting diodes.

Heat-conducting paste is advantageously used to increase the heat exchanging connection between the light emitting diode and the heat sink.

In a third preferred embodiment of the device according to the invention, the thermal conductivity of the housing is lower than the thermal conductivity of the heat sink.

A housing with a thermal conductivity lower than the thermal conductivity of the heat sink, increases the chance that heat generated in the light emitting diodes is transferred by convection alongside the heat sink over transfer to the housing. The heat sink may for instance be made of copper.

In a fourth preferred embodiment of the device according to the invention, the device further comprises ventilation means, such as at least one fan, arranged for drawing air from the outside of the housing through and outward from the housing.

The provision of ventilation means, such as one or a plurality such as two fans, in the housing will allow any heat built up in the housing to be expelled by an air flow in an efficient way. Preferably, the air flow enters the housing through an opening near or at the top of the housing, and leaves the housing through an opening near or at the bottom of the housing.

When the heat sink is made of copper, the housing may is in this embodiment preferably made of aluminium. Aluminium does have a thermal conductivity compared to copper which is low enough to prevent a large amount of heat to transfer to the housing as compared to the transfer to the air flowing along the heat sink, while at the same time allowing very large amounts of heat to be expelled through the ventilation means from the housing in that case that air flow along the heat sink is not sufficient for transfer of all heat.

In a fifth preferred embodiment of the device according to the invention, the device further comprises a movable frame, on which the housing of the device is arranged.

A movable frame allows the housing to be moved over surfaces, and broadens the application of the device to a variety of applications, such as recording of events such as pop concerts.

These and other features of the invention will be elucidated in conjuction with the accompanying drawings.
Figure 1 shows a perspective view of a device according to the invention.
Figure 2 shows a schematic view of the device according to figure 1.

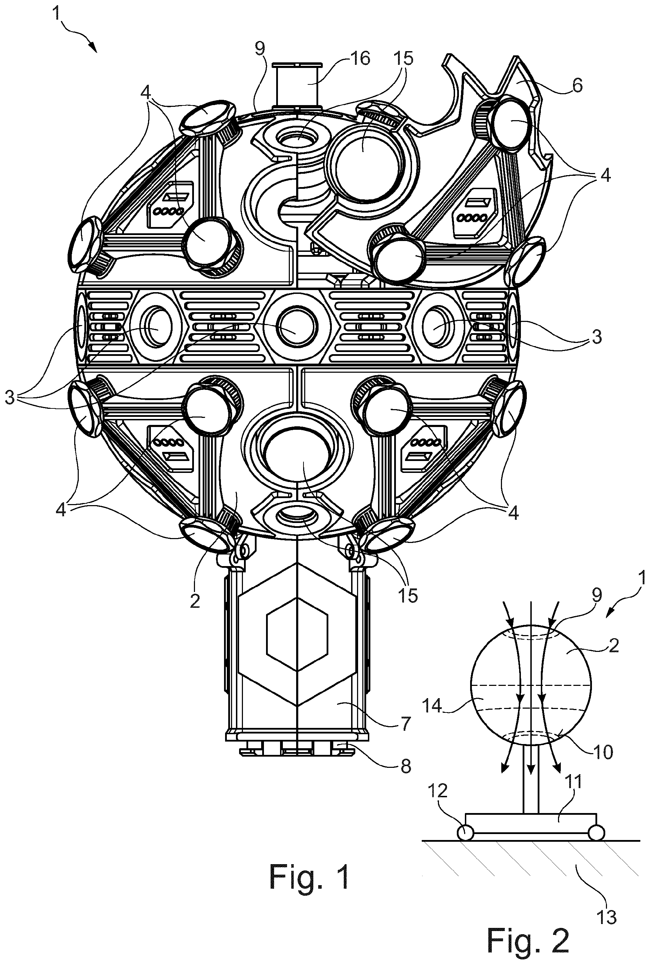

In figure 1, a device 1 is shown. The device comprises a spherical housing 2 made of aluminum. In the housing, a plurality of cameras 3 are arranged and fixed to the housing 2 with overlapping fields of view. In addition to this, a plurality of light emitting diodes 4 is fixed to the housing 2 via a triangle shaped heat sinks 5 made of copper which are, with the bottom connected to the housing 2, and with the top connected to the light emitting diodes 4. Housing 2 comprises a number of housing segments, of which housing segment 6 is shown hinged outwardly from its normally closed position, allowing inspection of the interior of housing 2. Device 1 furthermore comprises a foot 7 which is connectable to a movable frame (not shown) through connection 8. A router (not shown) is arranged in foot 7. Device 1 is furthermore provided with a fan inlet 9 at the top of the housing 2. Device 1 furthermore comprises antennas 15, connected to the router, and an omnidirectional microphone 16.

In figure 2, the device 1 is shown without cameras 3 and light emitting diodes 4. The housing 2 is provided with a fan inlet 9 and fan outlet 10 at the bottom of the housing 1. The housing is arranged on a movable frame 11 with wheels 12, movable over a floor 13. Fans 14, shown in dotted lines are arranged within the housing 2 arranged for drawing air from the outside of the housing 2 through and outward from the housing 2.

Furthermore, publication US 2016/0261829 A1 discloses a device comprising a spherical housing, a plurality of cameras, arranged to and projecting outwardly from the housing and a plurality of light emitting diodes, arranged to and projecting outwardly from the housing. In this device, the light emitting diodes are recessed within the housing. In this device, still a large amount of heat is transferred to the housing.

## Claims

1. Device for recording a three-dimensional environment, comprising:
- a preferably spherical housing;
- a plurality of cameras, arranged to and projecting outwardly from the housing with overlapping fields of view; and
- a plurality of light emitting diodes, arranged to and projecting outwardly from the housing
**characterized in that**
the device comprises at least one heat sink with a bottom, fixed to the outer surface of the housing, and a top, arranged in heat exchanging contact with the plurality of light emitting diodes.

2. Device according to claim 1, wherein the heat sink comprises a plurality of spaced apart elongate fins, upright from the bottom and preferably in heat exchanging contact with the light emitting diodes.

3. Device according to claim 1 or 2, wherein the device comprises a heat-conducting paste, arranged between the heat sink and the light emitting diodes.

4. Device according to claim 1, 2 or 3, wherein the thermal conductivity of the housing is lower than the thermal conductivity of the heat sink.

5. Device according to any of the preceding claims, further comprising ventilation means, such as at least one fan, arranged for drawing air from the outside of the housing through and outward from the housing.

6. Device according to any of the preceding claims, wherein the device further comprises a movable frame, on which the housing of the device is arranged.
